# EUROPEAN PATENT APPLICATION

(11) **EP 1 873 043 A1**
(43) Date of publication of application: **02.01.2008**
(21) Application number: 07111038.1
(22) Date of filing: 26.06.2007
(51) Int. Cl.: B62D 25/10, E02F 9/08, E02F 9/16

(54) **Hood guard for construction machines**

(30) Priority: 30.06.2006 JP 2006181582
(71) Applicant: KOBELCO CONSTRUCTION MACHINERY CO., LTD., Hiroshima-shi, Hiroshima 731-0138 (JP)
(72) Inventor: Yonezawa, Koji Kobelco Construction Machinery Co., Ltd., Hiroshima-shi Hiroshima 731-0138 (JP); Sakitani, Shintaro Kobelco Construction Machinery Co., Ltd., Hiroshima-shi Hiroshima 731-0138 (JP)
(74) Representative: TBK-Patent

(57) **Abstract**

A guard member (21) for covering devices which is provided in an upper rotating body (2) is provided with left and right maintenance holes (22,23) for maintenance of the devices from two positions on the left side and the right side, and left and right maintenance panels (24,25) for rotating taking the rear side as a support point so as to open and close the maintenance holes (22,23). In this case, panel main bodies (26,27) of the both panels (24,25) are formed vertically symmetrically with the same shape and the same size as each other corresponding to the maintenance holes (22,23). The both panels (24,25) are attached to the guard member in a vertically reversed state to each other and in a state that the hinge members (28) are located on the rear side.

## Description

### BACKGROUND OF THE INVENTION

### (FIELD OF THE INVENTION)

The present invention relates to a guard structure in which maintenance holes and maintenance panels for opening and closing the maintenance holes are provided in a guard member for covering devices in a construction machine.

### (DESCRIPTION OF THE RELATED ART)

On the rear side of an upper rotating body of a hydraulic excavator, an engine room covered by a guard member is formed and devices such as an engine are installed in the engine room.

An upper surface part of the guard member is made by a panel material, and left and right side surface parts and a back surface part are made by counterweights having substantially circular shapes seen from a top respectively. In other cases, the back surface part is formed by the counterweight, and the left and right side surface parts are made by the panel materials.

On the left and right side surface parts of the guard member, are provided maintenance holes (generally having the same shape and the same size as each other) and maintenance panels for opening and closing the maintenance holes. From the maintenance holes, maintenance is performed such as check, improvement, and exchange of internal devices.

The maintenance panels are constructed such that panel parts such as hinge members and a lock device are attached to panel main bodies formed by press-processing plate materials. In a state that the hinge members serving as opening and closing support points are located on the same side in the longitudinal direction (generally on the rear side), the maintenance panels are attached to the guard member by the hinge members.

The above-mentioned guard structure is for example disclosed in Japanese Patent Laid-Open No. 2004-92177.

In the conventional guard structure, the maintenance panels having the same shape and the same size as each other are attached to the guard member in a state that longitudinal directions thereof are the same.

In this case, since a vertical directional property of the panel main bodies of the both maintenance panels is fixed, the panel main bodies are divided into different bodies on the left side and the right side, and thus manufactured separately as two types of parts.

Therefore, since two types of dies for processing the panel main bodies from the plate materials are required and manufacturing lines are separated, there are problems of high cost and low productivity

It should be noted that when the both maintenance panels are attached on the left side and the right side of the guard member in a state that the opening and closing support points (hinge members) thereof are oppositely located on the front side and the rear side, only one type of the panel main body needs to be manufactured. However, as an adverse effect, since the opening and closing support point of one panel is located down the wind when transporting the machine by a truck, there is a danger that the panel is opened by wind pressure in the case of fault lock or incomplete lock. Therefore, this method could not be adopted as a matter of practice.

### SUMMARY OF THE INVENTION

It is an the object of the present invention to provide a guard structure of a construction machine capable of using panel main bodies of left and right maintenance panels as one type of part.

Firstly, the guard structure of the construction machine according to the present invention has the following basic construction.

That is, the present invention is a guard structure of a construction machine, provided with a guard member for covering devices arranged in an upper rotating body rotatably installed on a lower traveling body Two maintenance holes for maintenance of the devices from two positions are formed on the guard member and two maintenance panels for respectively opening and closing the maintenance holes, the maintenance panels being rotatably provided on the guard member taking one of front side and rear side as a support point. The both maintenance panels are constructed such that panel parts including hinge members as rotational support points are attached to panel main bodies. Further, the panel main bodies of the two maintenance panels have the same shape and the same size as each other and are formed vertically symmetrically, and the maintenance panels are attached to the guard member in a vertically reversed state to each other and in a state that the hinge members are located on the same side in the longitudinal direction.

According to the present invention, since the panel main bodies of the two maintenance panels have the same shape and the same size as each other and are formed vertically symmetrically, and the maintenance panels are attached to the guard member in a vertically reversed state to each other and in a state that the hinge members are located on the same side in the longitudinal direction, it is possible to manufacture the both panel main bodies as one type of part having the same shape and the same size. For example, it is possible to provide the maintenance panel on both the left side and the right side.

Therefore, only one type of die for processing the panel main bodies is required and only one manufacturing line is needed. Thus, die cost and processing cost can be reduced and productivity can be largely improved.

### BRIEF DESCRIPTION OF THE DRAWINGS

Fig. 1 is a perspective view of an upper rotating body of a hydraulic excavator provided with a guard structure according to a basic embodiment of the present invention;
Fig. 2 is a back view of the guard structure according to the embodiment;
Fig. 3 is a plan view of left and right maintenance panels of the guard structure;
Fig. 4 is an enlarged front view of the panels seen from the inside;
Fig. 5 is an enlarged sectional view sectioned by the line V-V of Fig. 4;
Fig. 6 is an enlarged sectional view sectioned by the line VI-VI of Fig. 4;
Fig. 7 is an enlarged sectional view sectioned by the line VII-VII of Fig. 4; and
Figs. 8A and 8B are views showing arrangement of attachment holes of a lock device in guard structures according to a second embodiment and a third embodiment of the present invention respectively

### DESCRIPTION OF THE PREFERRED EMBODIMENTS

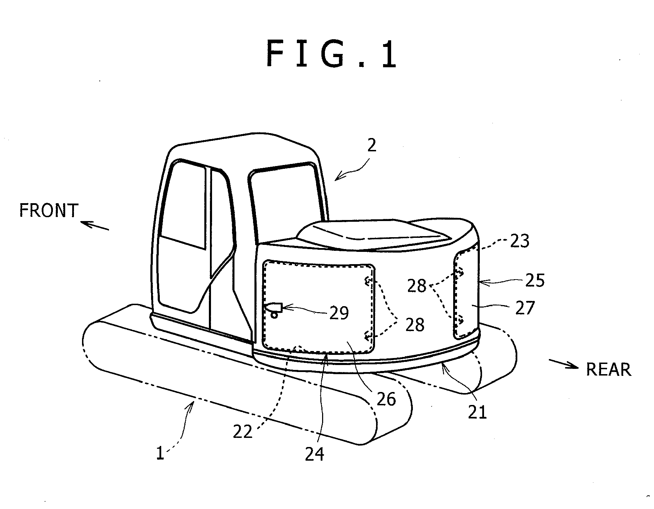

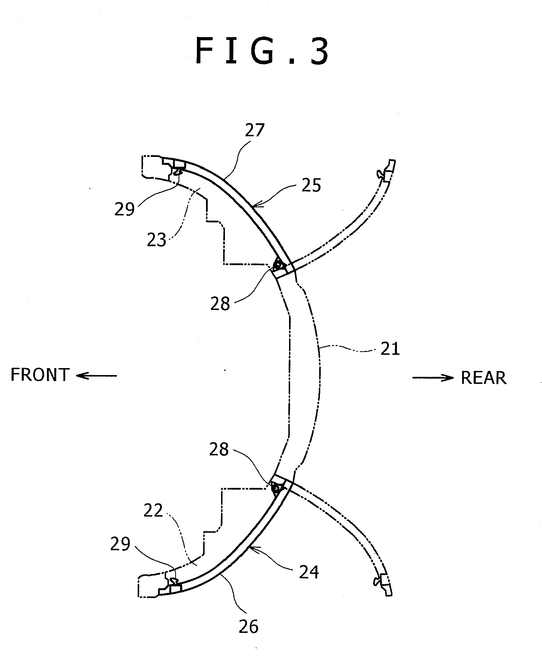

Embodiments of the present invention will be described with reference to Figs. 1 to 8.

### Basic Embodiment (refer to Figs. 1 to 7)

As shown in Fig. 1, on a rear part of an upper rotating body 2 installed on a lower traveling body 1, is provided a guard member 21 for covering devices such as an engine. To the guard member 21, are provided left and right maintenance holes 22 and 23 and maintenance panels 24 and 25 for opening and closing the maintenance holes. In Fig. 1, the lower traveling body 1 indicated by a chain double-dashed line can be exemplified in a crawler type lower traveling body. In a hydraulic excavator shown in Fig. 1, working attachment to be equipped to a front part of the upper rotating body 2 is not shown. An engine room (no reference numeral) covered by the guard member 21 is formed and in the engine room, are installed an engine, a hydraulic pump, a radiator, a cooling fan, an air cleaner, a working oil tank and other devices.

It should be noted that, in the present embodiment, the maintenance holes 22 and 23 and the both maintenance panels for opening and closing the maintenance holes are provided at two positions on the left side and on the right side seen from the rear side of the construction machine.

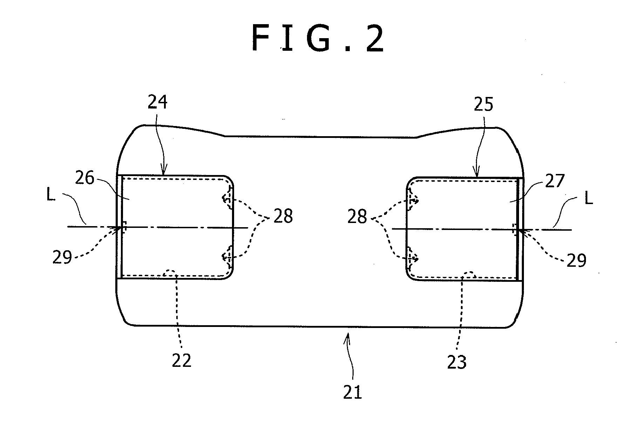

The left and right maintenance holes 22 and 23 are, in the present embodiment as shown in Fig. 2, respectively formed vertically symmetrically and have the same shape and the same size as each other in the guard member 21.

The left and right maintenance panels 24 and 25 are, as shown in Figs. 2 to 4 and Fig. 7, constructed such that panel parts such as hinge members 28 and a lock device 29 are attached to panel main bodies 26 and 27 formed in a substantially square by press-processing plate materials. In a state that the hinge members 28 are located on the rear side (on the rear side of the machine), and in a state that the maintenance holes 22 and 23 can be opened and closed taking the hinge members 28 as support points, the hinge members 28 are attached to the guard member 21.

The panel main bodies 26 and 27 of the both maintenance panels 24 and 25 have, as shown in Fig. 2, the same shape and the same size as each other (the shape and the size corresponding to the maintenance holes 22 and 23) and are formed vertically symmetrically.

That is, the same two panels which are formed vertically symmetrically as a whole including outer shape, vertical and horizontal sectional shapes thereof and have no vertical directional property are formed as the panel main bodies 26 and 27 by vertically reversing the panels to each other so that a lateral direction of one panel is opposed to the other panel. By attaching the panel parts to the panel main bodies by symmetrical arrangement, the left and right maintenance panels 24 and 25 are constructed. In Figs. 2, 4 and 7, L denotes a center line in the vertical direction of the both maintenance holes 22 and 23 and the both panels 24 and 25 (the panel main bodies 26 and 27) in the guard member 21.

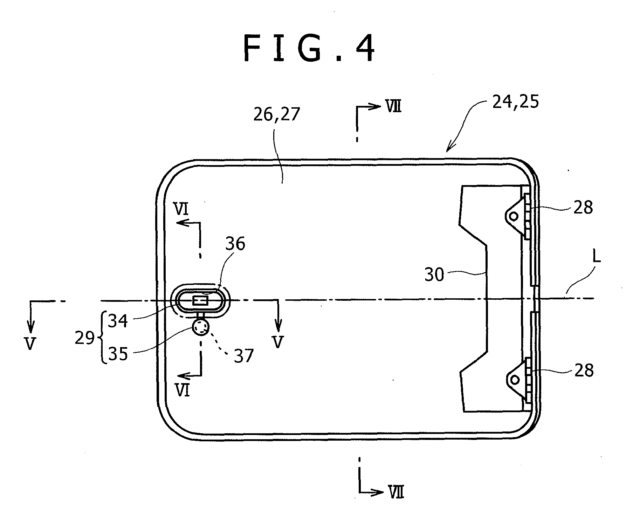

The hinge members 28 are symmetrically provided on both the upper side and the lower side of the center line L as shown in Fig. 4 and the like. Panel shapes in a state that the hinge members 28 are attached are formed vertically symmetrically

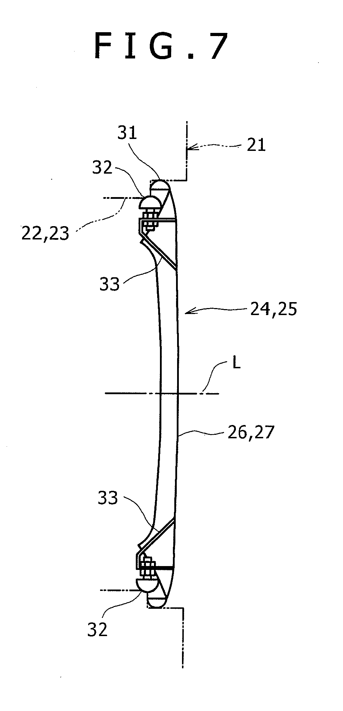

It should be noted that in Fig. 4 the numeral 30 denotes a reinforcing member provided on an attachment part of the hinge members 28, in Fig. 7 the numeral 31 denotes a sealing material provided on a peripheral part of the maintenance panels 24 and 25, the numerals 32 denote stoppers provided on the upper side and the lower side of the maintenance panels 24 and 25, and the numerals 33 denote stopper attachment members for attachment of the stoppers 32. The reinforcing member 30, the sealing material 31, the stoppers 32 and the stopper attachment members 33 are also constructed vertically symmetrically

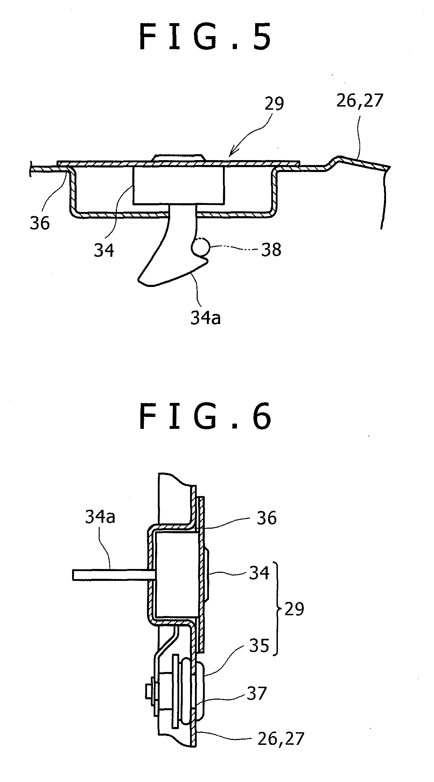

On the other hand, the lock device 29 comprises, as shown in Figs. 4 to 6, a lock mechanism 34 and a key cylinder 35 for controlling (lock/unlock of) the lock mechanism 34 from the outside. The lock device is attached to a lock mechanism attachment hole 36 and a key cylinder attachment hole 37 which are provided on the panel main bodies 26 and 27. In Fig. 5, the numeral 34a denotes a latch of the lock mechanism 34 and the numeral 38 denotes an engagement member on the guard member side with which the latch 34a is engaged in a closed state of the panels.

The lock mechanism attachment hole 36 and the key cylinder attachment hole 37 are, as shown in Figs. 4 to 6, provided on the upper side and the lower side respectively. Therefore, the both attachment holes 36 and 37 are not vertically symmetrical and hence processed on the panel main bodies 26 and 27 separately.

As mentioned above, since the panel main bodies 26 and 27 of the left and right maintenance panels 24 and 25 are formed vertically symmetrically with the shape and the size corresponding to the maintenance holes 22 and 23, and the both maintenance panels 24 and 25 are attached to the guard member 21 in a vertically reversed state to each other and in a state that the hinge members 28 are located on the same side (rear side) of one of front side and rear side, it is possible to manufacture the both panel main bodies 26 and 27 as one type of part having the same shape and the same size as each other.

Therefore, only one type of die for processing the panel main bodies 26 and 27 is required and only one manufacturing line is needed. Thus, die cost and processing cost can be reduced and productivity can be largely improved.

Further, by vertically reversing the panels, the hinge members 28 of the both panels 24 and 25 are located on the same side in the longitudinal direction. Therefore, when transporting the machine by a truck, by loading the machine on the truck in a direction that the hinge members 28 are located on the wind (loading rearward in the present embodiment), it is possible to avoid a danger that the maintenance panels 24 and 25 are opened by wind pressure.

Since the panel shapes in a state that the hinge members 28 are attached to the panel main bodies 26 and 27 are formed vertically symmetrically, the manufacturing lines are common until the attachment process of the hinge members 28. Therefore, the cost can be further reduced and the productivity can be further improved.

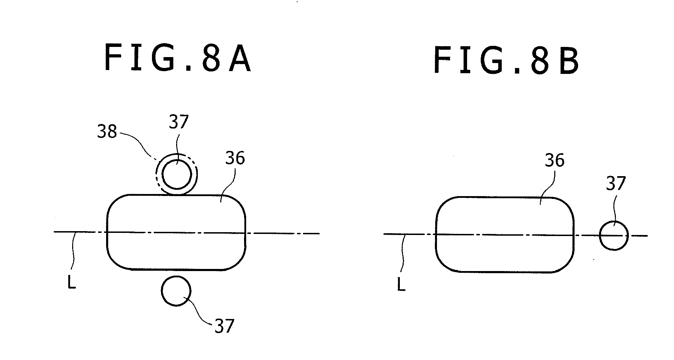

### Second and Third Embodiments (refer to Figs 8A and 8B)

In a second embodiment, as shown in Fig. 8A, the key cylinder attachment holes 37 are provided symmetrically on the upper side and the lower side of the lock mechanism attachment hole 36.

By this, it is possible to unify the manufacturing lines including a boring process of the lock mechanism attachment hole 36 and the key cylinder attachment holes 37 and an installation process of the lock device 29.

In this case, the upper key cylinder attachment hole 37 which is not used may be blocked by a plastic or rubber stopper 38 for example.

In a third embodiment, as shown in Fig. 8B, the lock mechanism attachment hole 36 and the key cylinder attachment hole 37 are aligned on the left side and the right side on the center line L.

By this, since the both attachment holes 36 and 37 are vertically symmetrical, it is possible to gain the same effect as the second embodiment. Further, there is no need for blocking the extra key cylinder attachment hole 37 by the stopper 38 unlike the second embodiment.

Although the hinge members 28 are desirably provided on the rear side of the maintenance panels 24 and 25 as in the above embodiments, the hinge members may be provided on the front side. In this case, when transporting the machine by the truck, the machine may be loaded forward to the truck so that the hinge members are located on the wind.

Meanwhile, as the lock device 29, a lock device constructed to lock/unlock by operating the latch by a lever may be used. In this case, only one circular hole for attachment of the lever is required as the attachment hole.

The left and right maintenance holes 22 and 23 are not necessarily the same shape and the same size as each other. The present invention can be applied to the case where one of the shape and the size, or both are different. In this case, the left and right maintenance panels 24 and 25 may be the same shape and the same size as each other capable of opening and closing the both maintenance holes 22 and 23 and formed vertically symmetrically

Although the invention has been described with reference to the preferred embodiments in the attached figures, it is noted that equivalents may be employed and substitutions made herein without departing from the scope of the invention as recited in the claims.

A guard member for covering devices which is provided in an upper rotating body is provided with left and right maintenance holes for maintenance of the devices from two positions on the left side and the right side, and left and right maintenance panels for rotating taking the rear side as a support point so as to open and close the maintenance holes. In this case, panel main bodies of the both panels are formed vertically symmetrically with the same shape and the same size as each other corresponding to the maintenance holes. The both panels are attached to the guard member in a vertically reversed state to each other and in a state that the hinge members are located on the rear side.

## Claims

1. A guard structure of a construction machine, comprising:
a guard member for covering devices arranged in an upper rotating body rotatably installed on a lower traveling body, two maintenance holes for maintenance of said devices from two positions being formed on said guard member; and
two maintenance panels for respectively opening and closing said maintenance holes, the maintenance panels being rotatably provided on said guard member taking one of front side and rear side as a support point, the both maintenance panels being constructed such that panel parts including hinge members as rotational support points are attached to panel main bodies,
wherein the panel main bodies of said maintenance panels have the same shape and the same size as each other and are formed vertically symmetrically, and the maintenance panels are attached to said guard member in a vertically reversed state to each other and in a state that said hinge members are located on the same side in the longitudinal direction.

2. The guard structure of the construction machine according to claim 1, wherein one of said maintenance holes and one of said maintenance panels for opening and closing said maintenance holes are provided on the left side and also on the right side seen from the rear side of said construction machine.

3. The guard structure of the construction machine according to claims 1 or 2, wherein said both maintenance panels are attached to said guard member in a state that the hinge members are located on the rear side.

4. The guard structure of the construction machine according to any one of claims 1 to 3, wherein said maintenance panels are constructed such that panel shapes in a state that the hinge members are attached to said panel main bodies are formed vertically symmetrically.

5. The guard structure of the construction machine according to any one of claims 1 to 4, further comprising:
a lock device for locking said maintenance panels in a closed state as a panel part, the lock device being provided on said both maintenance panels,
wherein panel shapes including attachment holes for attachment of said lock device to the panel main bodies are formed vertically symmetrically.
